# EUROPÄISCHE PATENTANMELDUNG

(11) **EP 4 407 835 A2**
(43) Veröffentlichungstag der Anmeldung: **31.07.2024**
(21) Anmeldenummer: 23220086.5
(22) Anmeldetag: 22.12.2023
(51) Int. Cl.: H02J 13/00, H02J 3/38, H02J 3/14

(54) **ENERGIEMANAGEMENTSYSTEM ZUM BETREIBEN EINES STROMNETZES**

(30) Priorität: 24.01.2023 DE 102023101733
(71) Anmelder: Avacon Netz GmbH, 38350 Helmstedt (DE)
(72) Erfinder: Petters, Benjamin, 12487 Berlin (DE); Dult, Navreet, 38102 Braunschweig (DE); Jätz, Christoph, 30165 Hannover (DE)
(74) Vertreter: Bals & Vogel Patentanwälte PartGmbB

(57) **Zusammenfassung**

Die Erfindung betrifft ein Energiemanagementsystem (2) zum Betreiben eines Stromnetzes zur Übertragung von elektrischem Strom, aufweisend zumindest einen lokalen Stromverteilnetzabschnitt (8), zur Verteilung von elektrischem Strom auf einem ersten Spannungsniveau, einen regionalen Stromverteilnetzabschnitt (10), zur Verteilung von elektrischem Strom auf einem zweiten, vom ersten verschiedenen, Spannungsniveau, zumindest eine lokale Energieverwaltungseinheit (12) zur Erfassung eines aktuellen Zustands des lokalen Stromverteilnetzabschnitts (8), zur Steuerung einer Einspeisung von Strom aus dem lokalen Stromverteilnetzabschnitt (8) und zur Steuerung einer Ausspeisung von Strom in den lokalen Stromverteilnetzabschnitt (8), zumindest eine regionale Energieverwaltungseinheit (14) zur Erfassung eines aktuellen Zustands des regionalen Stromverteilnetzabschnitts (10), zur Steuerung einer Einspeisung von Strom aus dem regionalen Stromverteilnetzabschnitt (10) und zur Steuerung einer Ausspeisung von Strom in den regionalen Stromverteilnetzabschnitt (10) sowie eine Kommunikationsverbindung (16) zwischen der lokalen Energieverwaltungseinheit (12) und der regionalen Energieverwaltungseinheit (14) zur Ausführung einer gezielten Steuerung der lokalen Energieverwaltungseinheit (12) auf Basis des aktuellen Zustands des regionalen Stromverteilnetzabschnitts (10).

## Beschreibung

Die vorliegende Erfindung betrifft ein Energiemanagementsystem sowie ein Verfahren zum Betreiben eines Stromnetzes zur Übertragung von elektrischem Strom. Darüber hinaus umfasst die Erfindung eine Kontrolleinheit zur Anordnung in einem derartigen Energiemanagementsystem.

Verfahren und Systeme zum Betreiben von Stromnetzen sind aus dem Stand der Technik bekannt. Zur Vermeidung oder Beseitigung von Netzschwankungen und regionalen Überlastungen einzelner Betriebsmittel innerhalb eines Stromübertragungsnetzes, ist es bekannt, Energieerzeuger auf Hochspannungs- oder Mittelspannungsebene gezielt hinsichtlich ihrer Leistungseinspeisung anzupassen. Im Rahmen der Durchführung eines so genannten "Redispatches" werden dabei zentral gesteuerte kurzfristige Veränderungen einer Lastaufteilung und Kraftwerkseinsatzplanung zwischen verschiedenen Kraftwerken durchgeführt. Eine solche Routine wird zumindest für Kraftwerksanlagen mit einer großen Nennleistung von über 100 kW durchgeführt.

Nachteiliger Weise ist eine solche zentral gesteuerte Anpassung von Lastaufteilungen nur wenig sensitiv, sodass es den bekannten Verfahren und Systemen zur Anpassung von Lastaufteilungen an Flexibilität mangelt. Insbesondere die Planung der vorzunehmenden Anpassungen ist daher aufwändig und nachträglich nicht ohne weiteres anpassbar.

Es ist daher die Aufgabe der vorliegenden Erfindung, die voranstehend genannten Nachteile bekannter Systeme und Verfahren zum Betreiben von Stromnetzen zumindest teilweise zu beheben. Insbesondere ist es die Aufgabe der Erfindung, ein System sowie ein Verfahren zum Betreiben eines Stromnetzes zur Verfügung zu stellen, das unter Gewährleistung einer stabilen Netzspannung auch einen einfach, dynamisch und flexibel anpassbaren Betrieb gewährleistet.

Die voranstehende Aufgabe wird gelöst durch ein Energiemanagementsystem mit den Merkmalen des Anspruchs 1, eine Kontrolleinheit gemäß Anspruch 8 sowie ein Verfahren gemäß Anspruch 9. Weitere Merkmale und Details der Erfindung ergeben sich aus den Unteransprüchen, der Beschreibung und den Zeichnungen. Technische Merkmale, die zu dem erfindungsgemäßen Energiemanagementsystem offenbart werden, gelten dabei auch in Verbindung mit der erfindungsgemäßen Kontrolleinheit sowie dem erfindungsgemäßen Verfahren und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Erfindungsgemäß ist ein Energiemanagementsystem zum Betreiben eines Stromnetzes zur Übertragung von elektrischem Strom vorgesehen. Das erfindungsgemäße Energiemanagementsystem umfasst hierbei zumindest einen lokalen Stromverteilnetzabschnitt, zur Verteilung von elektrischem Strom auf einem ersten Spannungsniveau, einen regionalen Stromverteilnetzabschnitt, zur Verteilung von elektrischem Strom auf einem zweiten, vom ersten verschiedenen, Spannungsniveau, zumindest eine lokale Energieverwaltungseinheit zur Erfassung eines aktuellen Zustands des lokalen Stromverteilnetzabschnitts, zur Steuerung einer Einspeisung von Strom aus dem lokalen Stromverteilnetzabschnitt und zur Steuerung einer Ausspeisung von Strom in den lokalen Stromverteilnetzabschnitt, zumindest eine regionale Energieverwaltungseinheit zur Erfassung eines aktuellen Zustands des regionalen Stromverteilnetzabschnitts, zur Steuerung einer Einspeisung von Strom aus dem regionalen Stromverteilnetzabschnitt und zur Steuerung einer Ausspeisung von Strom in den regionalen Stromverteilnetzabschnitt sowie eine Kommunikationsverbindung zwischen der lokalen Energieverwaltungseinheit und der regionalen Energieverwaltungseinheit zur Ausführung einer gezielten Steuerung der lokalen Energieverwaltungseinheit auf Basis des aktuellen Zustands des regionalen Stromverteilnetzabschnitts.

Unter einem aktuellen Zustand eines lokalen oder regionalen Stromverteilnetzabschnitts kann erfindungsgemäß insbesondere ein Netzzustand verstanden werden, wie eine aktuelle Netzstabilität oder Netzauslastung. Ein solcher Netzzustand kann bspw. anhand einer Ermittlung einer aktuellen Spannung und/oder eines aktuellen Stroms und/oder einer aktuellen Spannungsverteilung und/oder einer aktuellen Stromverteilung ermittelt werden. Ebenso kann zur Ermittlung eines Netzzustandes eine Wirk- bzw. Blindleistung, eine Temperatur, ein elektrischer Widerstand von Betriebsmitteln oder ähnliches erfasst werden. Unter einer gezielten Steuerung kann im Rahmen der Erfindung insbesondere eine Einspeisung von Strom aus dem lokalen Stromverteilnetzabschnitt oder ein Ausspeisen von Strom in den lokalen Stromverteilnetzabschnitt verstanden werden. Eine erfindungsgemäß vorgesehene Kommunikation zwischen der lokalen und der regionalen Energieverwaltungseinheit kann vorzugsweise über Standardschnittstellen erfolgen. Es versteht sich zudem, dass eine gezielte Steuerung der lokalen Energieverwaltungseinheit zumindest zusätzlich auch auf Basis des aktuellen Zustands des lokalen Stromverteilnetzabschnitts erfolgen kann. Unter einem Steuern bzw. einer Steuerung kann erfindungsgemäße ebenso ein Regeln bzw, eine Regelung verstanden werden.

Im Rahmen der Erfindung ist erkannt worden, dass auf Basis der erfindungsgemäß vorgesehenen Kommunikation zwischen der lokalen Energieverwaltungseinheit und der regionalen Energieverwaltungseinheit zur Ausführung einer gezielten Steuerung der lokalen Energieverwaltungseinheit auf Basis des aktuellen Zustands des regionalen Stromverteilnetzabschnitts, eine dezentrale Steuerung von Lastanpassungen ausgehend aus lokalen Stromverteilnetzabschnitten ermöglicht wird, sodass unter Gewährleistung einer stabilen Netzspannung auch ein einfacher, dynamischer und flexibel anpassbarer Betrieb eines Stromnetzes ermöglicht wird. Hierbei kann das erfindungsgemäße Energiemanagementsystem nicht nur zur intelligenten Verteilung eines Lastmanagements bei einer Einspeisung verwendet werden, sondern ebenfalls zur intelligenten Steuerung von Lasten dienen. Eine undynamische und unflexible zentrale Steuerung eines Stromnetzes kann somit durch die vorgesehene Auslagerung bzw. Dezentralisierung dynamisch und flexibel betrieben werden. Somit wird ein Energiemanagementsystem zum Betreiben eines Stromnetzes zur Verfügung gestellt, das auch der stetig steigenden Anzahl dezentraler Energieressourcen, wie Photovoltaik, Wallboxen, Wärmepumpen, Batteriespeicher und anderer Technologien und dem sich daraus ändernden Verbrauchsverhalten (z.B. PV-Eigenverbrauch) gerecht wird, eine sichere Betriebsführung gewährleistet und Bedürfnisse von Kunde, Markt und Netzbetreiber gleichermaßen berücksichtigt. Durch die Dezentralisierung der Netzführung wird eine Entlastung herbeigeführt, da eine direkte Anbindung einer großen Zahl von Kleinstanlagen an eine zentrale Netzführung nun nicht mehr notwendig ist.

Im Rahmen einer effektiven Dezentralisierung eines Energiemanagementsystems unter Ausnutzung der zunehmenden Anzahl von dezentralen Energieressourcen kann erfindungsgemäß vorteilhafterweise vorgesehen sein, dass der lokale Stromverteilnetzabschnitt als Niederspannungsnetzabschnitt ausgebildet ist und das erste Spannungsniveau als Niederspannung ausgebildet ist und/oder der regionale Stromverteilnetzabschnitt als Mittelspannungsnetzabschnitt ausgebildet ist und das zweite Spannungsniveau als Mittelspannung ausgebildet ist. Unter Niederspannung kann hierbei vorzugsweise ein Spannungsbereich von < 1 kV (Wechselspannung) verstanden werden. Unter Mittelspannung kann entsprechend ein Spannungsbereich von 1 bis 52 kV (Wechselspannung) verstanden werden.

Im Hinblick auf die Gewährleistung eines besonders flexiblen Lastmanagements kann gegenständlich vorteilhafterweise vorgesehen sein, dass eine Mehrzahl von lokalen Stromverteilnetzabschnitten vorgesehen ist, die vorzugsweise parallel zueinander angeordnet sind, wobei die einzelnen lokalen Stromverteilnetzabschnitte insbesondere jeweils eine lokale Energieverwaltungseinheit aufweisen. Es versteht sich, dass unter einer parallelen Anordnung vorzugsweise keine geometrisch parallele Anordnung verstanden wird, sondern eine parallele Anordnung im Sinne einer Verschaltungstechnik (entgegen einer seriellen Anordnung) verstanden werden kann.

Im Rahmen eines besonders flexiblen Lastmanagements kann gegenständlich ferner vorgesehen sein, dass die lokalen Energieverwaltungseinheiten der einzelnen lokalen Stromverteilnetzabschnitte ebenfalls eine Kommunikationsverbindung zur Kommunikation untereinander aufweisen.

Zur effektiven Verbindung der Stromverteilnetzabschnitte kann es ferner von Vorteil sein, wenn zumindest ein Transformator zur Verbindung des zumindest einen lokalen Stromverteilnetzabschnittsmit dem regionalen Stromverteilnetzabschnitt vorgesehen ist, wobei der Transformator vorzugsweise als Niederspannungs/Mittelspannungstransformator ausgebildet ist. Die Transformatoren können bspw. in Form von spannungsregulierenden Verteiltransformatoren ausgebildet sein. Im Rahmen einer flexiblen und effektiven Steuerung eines Netzabschnitts kann der Transformator bspw. in Form eines regelbaren Transformators mit integrierter Sensorik und Kommunikationstechnik ausgebildet sein.

Im Rahmen einer effektiven Dezentralisierung eines Energiemanagementsystems unter Ausnutzung der zunehmenden Anzahl von dezentralen Energieressourcen kann erfindungsgemäß vorteilhafterweise vorgesehen sein, dass der Niederspannungsnetzabschnitt das Stromnetz von mehr als 50 Haushalten, vorzugsweise von mehr als 100 Haushalten umfasst, wobei zumindest eine Mehrzahl der Haushalte vorzugsweise dezentrale Energieressourcen ausweisen, wobei die dezentralen Energieressourcen als Photovoltaikanlagen und/oder Wallboxen und/oder Wärmepumpen und/oder Batteriespeicher ausgebildet sind. Als eine Mehrzahl kann hierbei zumindest 20 %, vorzugsweise zumindest 30% verstanden werden. Weitere dezentrale Energieressourcen können bspw. Elektroheizungen oder private Windkraftanlagen sein. Die Batteriespeicher können im Hinblick auf eine flexible Bereitstellung größerer Leistungsmengen in Form von Batteriegroßspeichern ausgebildet sein und bspw. eine Leistung von > 200 kW bereitstellen und eine Speicherkapazität von > 800 kWh aufweisen.

Im Hinblick auf eine effektive und verlustfreie Steuerung eines lokalen Stromverteilnetzabschnitts kann es ferner von Vorteil sein, wenn die lokale Energieverwaltungseinheit im Wesentlichen zentral innerhalb des lokalen Stromverteilnetzabschnitts angeordnet ist.

Unter einer im Wesentlichen zentralen Anordnung kann gegenständlich eine Anordnung verstanden werden, die vorzugsweise weniger als 20% von einer perfekt zentralen Anordnung abweicht.

Zur Übertragung eines erfindungsgemäß vorgesehenen Lastmanagements auf höhere Spannungsebenen ist es gegenständlich ferner denkbar, dass ein überregionaler Stromverteilnetzabschnitt zur Verteilung von elektrischem Strom auf einem dritten, vom ersten und zweiten verschiedenen, Spannungsniveau, vorgesehen ist, wobei der überregionale Stromverteilnetzabschnitt vorzugsweise als Hochspannungsnetzabschnitt ausgebildet ist und das dritte Spannungsniveau als Hochspannung ausgebildet ist, wobei insbesondere der überregionale Stromverteilnetzabschnitt über Transformatoren mit dem regionalen Stromverteilnetzabschnitt verbunden ist. Die Transformatoren können auch hier in Form von spannungsregulierenden Verteiltransformatoren ausgebildet sein. Im Rahmen einer flexiblen und effektiven Steuerung eines Netzabschnitts kann der Transformator bspw. in Form eines regelbaren Transformators mit integrierter Sensorik und Kommunikationstechnik ausgebildet sein.

Zur Gewährleistung einer zielgerichteten Steuerung der lokalen Energieverwaltungseinheit kann gegenständlich ferner vorgesehen sein, dass die lokale Energieverwaltungseinheit und/oder die regionale Energieverwaltungseinheit eine Sensoreinheit zur Erfassung von Daten zur Bestimmung eines aktuellen Netzzustandes eines lokalen oder regionalen Stromverteilnetzabschnitts und eine Verarbeitungseinheit zur Bestimmung eines aktuellen Netzzustandes eines lokalen oder regionalen Stromverteilnetzabschnitts auf Basis der erfassten Daten aufweist. Zusätzlich kann mittels der Sensoreinheit eine Erfassung von Umgebungsdaten, insbesondere von Wetterdaten erfolgen, um bspw. unter Einbeziehung weiterer Daten, wie Wetterprognosen, einer Datumsangabe oder dergleichen mittels der Verarbeitungseinheit eine Prognose für einen zukünftigen Verbrauch bzw. eine zukünftige Erzeugung ermitteln zu können.

Ebenfalls Gegenstand der Erfindung ist ferner eine Kontrolleinheit zur Anordnung in einem voranstehend beschriebenen Energiemanagementsystem. Damit weist die erfindungsgemäße Kontrolleinheit die gleichen Vorteile auf, wie sie bereits ausführlich in Bezug auf das erfindungsgemäße Energiemanagementsystem beschrieben worden sind. Für eine einfache Steuerung auch höherer Spannungsebenen kann die Kontrolleinheit vorzugsweise innerhalb des überregionalen Stromverteilnetzabschnitts angeordnet sein.

Ebenfalls Gegenstand der Erfindung ist ferner ein Verfahren zum Betreiben eines Stromnetzes zur Übertragung von elektrischem Strom, vorzugsweise unter Verwendung eines voranstehend beschriebenen Energiemanagementsystems. Hierbei umfasst das erfindungsgemäße Verfahren die Schritte eines Erfassens eines aktuellen Zustands eines regionalen Stromverteilnetzabschnitts mittels einer regionale Energieverwaltungseinheit, eines Erfassens eines aktuellen Zustands eines lokalen Stromverteilnetzabschnitts mittels einer lokalen Energieverwaltungseinheit sowie eines gezielten Steuerns der lokalen Energieverwaltungseinheit auf Basis des aktuellen Zustands des regionalen Stromverteilnetzabschnitts, wobei das gezielte Steuern ein Einspeisen von Strom aus dem lokalen Stromverteilnetzabschnitt oder ein Ausspeisen von Strom in den lokalen Stromverteilnetzabschnitt umfasst. Damit weist das erfindungsgemäße Verfahren die gleichen Vorteile auf, wie sie sie bereits ausführlich in Bezug auf das erfindungsgemäße Energiemanagementsystem bzw. die erfindungsgemäße Kontrolleinheit beschrieben worden sind. Das gezielte Steuern kann hierbei vorzugsweise auf Basis eines direkten Kommunikationsaustauschs zwischen der lokalen und der regionalen Energieverwaltungseinheit über eine Kommunikationsverbindung erfolgen.

Im Rahmen einer effektiven Dezentralisierung eines Energiemanagementsystems unter Ausnutzung der zunehmenden Anzahl von dezentralen Energieressourcen kann erfindungsgemäß vorteilhafterweise vorgesehen sein, dass das gezielte Steuern zusätzlich auf Basis des aktuellen Zustands des lokalen Stromverteilnetzabschnitts erfolgt.

Hierbei kann bspw. vorgesehen sein, dass das gezielte Steuern auf Basis einer Kommunikation zwischen der lokalen Energieverwaltungseinheit und der regionalen Energieverwaltungseinheit über eine Kommunikationsverbindung erfolgt, wobei im Rahmen der Kommunikation vorzugsweise der aktuelle Zustand des lokalen Stromverteilnetzabschnitts von der lokalen Energieverwaltungseinheit an die regionale Energieverwaltungseinheit übertragen wird und daraufhin insbesondere Anweisungen zur gezielten Steuerung der lokalen Energieverwaltungseinheit von der regionalen Energieverwaltungseinheit an die lokale Energieverwaltungseinheit übertragen werden. Anweisungen zur gezielten Steuerung können bspw. in Form von Steuerungsbefehlen zur Reduzierung der Einspeisung von Wirkleistung ausgebildet sein. Als Steuerungsbefehle können dabei bspw. Sollwerte oder Fahrpläne für Sollwerte oder dergleichen vorgesehen sein.

Zur Gewährleistung einer effizienten und verlustfreien Kommunikation ist es ferner denkbar, dass die Kommunikation zwischen der lokalen Energieverwaltungseinheit und der regionalen Energieverwaltungseinheit in aggregierter Form erfolgt, wobei vorzugsweise ein aggregierter aktueller Zustand des lokalen Stromverteilnetzabschnitts und/oder aggregierte Anweisungen zur gezielten Steuerung der lokalen Energieverwaltungseinheit übertragen werden. Aggregierte Steuerungsbefehle können vorzugsweise von der lokalen Energieverwaltungseinheit in anlagenindividuelle Steuerungsbefehle überführt werden, wobei die von der regionalen Energieverwaltungseinheit in aggregierter Form übertragenen Steuerbefehle vorzugsweise von der lokalen Energieverwaltungseinheit reaggegriert werden können, bevor anschließend einzelne Befehle an Anlagen innerhalb des lokalen Stromverteilnetzabschnitts versendet werden können.

Im Rahmen einer effektiven Dezentralisierung eines Energiemanagementsystems unter Ausnutzung der zunehmenden Anzahl von dezentralen Energieressourcen kann erfindungsgemäß vorteilhafterweise vorgesehen sein, dass das gezielte Steuern ein Einspeisen von Strom aus mehreren lokalen Stromverteilnetzabschnitten oder ein Ausspeisen von Strom in mehrere lokale Stromverteilnetzabschnitte umfasst, wobei das Einspeisen oder Ausspeisen vorzugsweise zumindest teilweise gleichzeitig erfolgt. Es versteht sich, dass auch eine alternierende Ein- oder Ausspeisung bzw. eine andersartig geregelte Ein- oder Ausspeisung vorgesehen sein kann.

Hierbei kann bspw. vorgesehen sein, dass eine Auswahl der lokalen Stromverteilnetzabschnitte zur Einspeisung oder Ausspeisung von Strom gezielt erfolgt, wobei eine ein- oder ausgespeiste Strommenge vorzugsweise gleichmäßig auf die ausgewählten Stromverteilnetzabschnitte verteilt wird.

Im Hinblick auf eine besonders zielgerichtete und vorausschauende Steuerung der lokalen Energieverwaltungseinheit ist es ferner denkbar, dass ein Erstellen einer Prognose bezüglich eines aktuell und/oder zukünftig zu erwartenden Stromverbrauchs und/oder bezüglich einer aktuell und/oder zukünftig zu erwartenden Stromerzeugung innerhalb eines lokalen und/oder regionalen Stromverteilnetzabschnitts vorgesehen ist, wobei das Erstellen der Prognose vorzugsweise die Erfassung und Verarbeitung von Daten mittels einer Sensoreinheit und einer Verarbeitungseinheit umfasst. Als Daten können bspw. Wetterdaten, Verbrauchsdaten, Tageszeitdaten, Jahreszeitdaten oder dergleichen vorgesehen sein. Die erfassten Daten können hierbei bspw. noch bearbeitet werden, wobei die Datenbearbeitung vorzugsweise zumindest ein Mitteln und/oder Gewichten der Daten umfasst. Zudem können die Daten auf bestimmte, bspw. besonders aussagekräftige oder relevante Bereiche eines Netzabschnitts beschränkt werden.

Im Rahmen einer besonders zielgerichteten und vorausschauenden Steuerung der lokalen Energieverwaltungseinheit ist es ferner denkbar, dass zur Erstellung der Prognose eines aktuell und/oder zukünftig zu erwartenden Stromverbrauchs und/oder einer aktuell und/oder zukünftig zu erwartenden Stromerzeugung eine Überwachung des lokalen und/oder regionalen Stromverteilnetzabschnitts durchgeführt wird, wobei die Überwachung vorzugsweise in Echtzeitmessung, insbesondere an strategisch ausgewählten Bereichen des lokalen und/oder regionalen Stromverteilnetzabschnitts erfolgt. Vorzugsweise kann zusätzlich eine Überwachung eines Residuallastgangs vorgesehen sein.

Ebenso kann zur Erhöhung der Flexibilität des gegenständlichen Verfahrens vorgesehen sein, dass das gezielte Steuern der lokalen Energieverwaltungseinheit zusätzlich auf Basis einer Überwachung von Flexibilitätspotentialen innerhalb des lokalen Stromverteilnetzabschnitts erfolgt, wobei die Flexibilitätspotentiale vorzugsweise auf Realbasis bestimmt werden. Vorzugsweise kann hierbei eine Einbindung von Optimierungs-Balancing- und Dispatching-Funktionen vorgesehen sein. Über Schnittstellen zu höhergelagerten Systemen der Netzführung (SCADA-System), bspw. im Rahmen eines Redispatches, oder zu zwischengelagerten regionalen Energiemanagementsystemen, kann hierbei ein Austausch relevanter Daten zum Netzzustand oder ein Austausch von Anweisungen für die Steuerung von Kleinstanlagen in der Niederspannungsebene erfolgen.

Zur Vereinfachung der Ausführung des gegenständlichen Verfahrens sowie zur Verbesserung der Genauigkeit ist es ferner denkbar, dass das Verfahren die Verwendung künstlicher Intelligenz umfasst, wobei vorzugsweise zumindest das gezielte Steuern der lokalen Energieverwaltungseinheit unter Verwendung von künstlicher Intelligenz erfolgt. Insbesondere kann das Erstellen einer Prognose auf Basis der Verwendung von KI erfolgen.

Es versteht sich in Bezug auf das erfindungsgemäße Verfahren, dass einzelne, mehrere oder alle obligatorischen und/oder optionalen Schritte des erfindungsgemäßen Verfahrens in der vorgeschlagenen Reihenfolge, aber auch abweichend von der vorgeschlagenen Reihenfolge ausgeführt werden können. Hierbei können einzelne, mehrere oder alle obligatorischen und/oder optionalen Schritte des erfindungsgemäßen Verfahrens insbesondere wiederholt, bspw. zyklisch wiederholt ausgeführt werden. Es versteht sich ferner, dass einzelne, mehrere oder alle der obligatorischen und optionalen Schritte des erfindungsgemäßen Verfahrens gegenständlich auch zumindest teilweise automatisch bzw. automatisiert ausgeführt werden können, insbesondere durch einen Computer implementiert werden können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung eines erfindungsgemäßen Energiemanagementsystems zum Betreiben eines Stromnetzes zur Übertragung von elektrischem Strom,
- Fig. 2: eine schematische Darstellung eines lokalen Stromverteilnetzabschnitts gemäß einem ersten Ausführungsbeispiel,
- Fig. 3: eine schematische Darstellung der einzelnen Schritte eines erfindungsgemäßen Verfahrens zum Betreiben eines Stromnetzes zur Übertragung von elektrischem Strom.

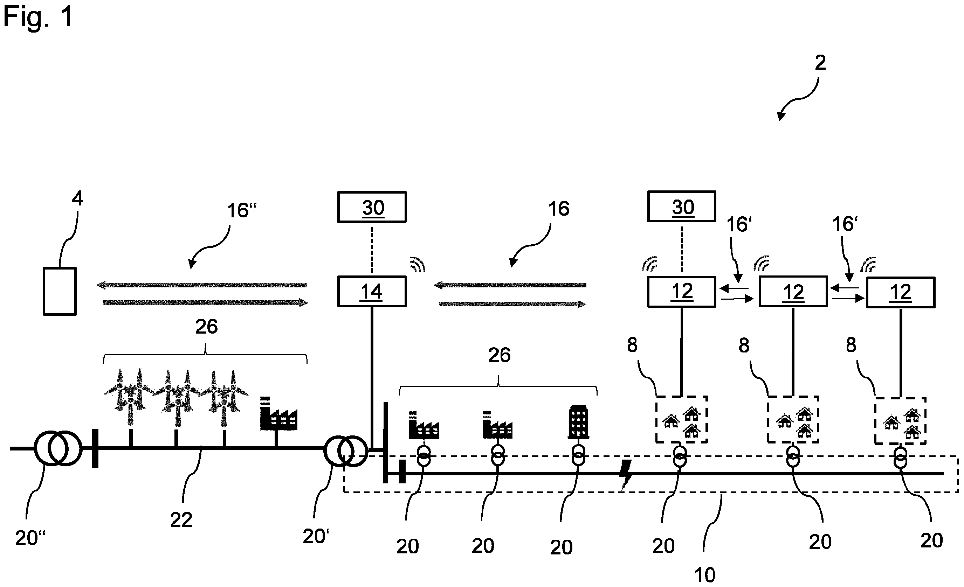

Fig. 1 zeigt eine schematische Darstellung eines erfindungsgemäßen Energiemanagementsystems 2 zum Betreiben eines Stromnetzes zur Übertragung von elektrischem Strom.

Wie gemäß Fig. 1 zur erkennen ist, umfasst das erfindungsgemäße Energiemanagementsystem 2 vorliegend drei Stromverteilnetzabschnitte 8, zur Verteilung von elektrischem Strom auf einem ersten Spannungsniveau und einen regionalen Stromverteilnetzabschnitt 10, zur Verteilung von elektrischem Strom auf einem zweiten, vom ersten verschiedenen, Spannungsniveau. Darüber hinaus umfasst das Energiemanagementsystem 2 jeweils pro Stromverteilnetzabschnitt 8, eine lokale Energieverwaltungseinheit 12 zur Erfassung eines aktuellen Zustands des jeweiligen lokalen Stromverteilnetzabschnitts 8, zur Steuerung einer Einspeisung von Strom aus dem jeweiligen lokalen Stromverteilnetzabschnitt 8 und zur Steuerung einer Ausspeisung von Strom in den jeweiligen lokalen Stromverteilnetzabschnitt 8 sowie eine regionale Energieverwaltungseinheit 14 zur Erfassung eines aktuellen Zustands des regionalen Stromverteilnetzabschnitts 10, zur Steuerung einer Einspeisung von Strom aus dem regionalen Stromverteilnetzabschnitt 10 und zur Steuerung einer Ausspeisung von Strom in den regionalen Stromverteilnetzabschnitt 10. Zudem umfasst das Energiemanagementsystem 2 eine zwischen der lokalen Energieverwaltungseinheit 12 und der regionalen Energieverwaltungseinheit 14 angeordnete Kommunikationsverbindung 16 zur Ausführung einer gezielten Steuerung der lokalen Energieverwaltungseinheit 12 auf Basis des aktuellen Zustands des regionalen Stromverteilnetzabschnitts 10.

Die lokalen Stromverteilnetzabschnitte 8 sind vorliegend als Niederspannungsnetzabschnitte ausgebildet und der regionale Stromverteilnetzabschnitt 10 als Mittelspannungsnetzabschnitt, wobei Transformatoren 20 zur Verbindung der lokalen Stromverteilnetzabschnitte mit dem regionalen Stromverteilnetzabschnitt 10 sowie zur Verbindung der Energieerzeuger 26 mit dem regionalen Stromverteilnetzabschnitt 10 vorgesehen sind.

Die lokalen Energieverwaltungseinheiten 12 weisen ebenfalls eine Kommunikationsverbindung 16' zur Kommunikation untereinander auf.

Darüber hinaus ist ein überregionaler Stromverteilnetzabschnitt 22 zur Verteilung von elektrischem Strom auf einem dritten, vom ersten und zweiten verschiedenen, Spannungsniveau, vorgesehen, der als Hochspannungsnetzabschnitt ausgebildet ist und über Transformatoren 20' bzw. 20" angebunden ist. Innerhalb des überregionalen Stromverteilnetzabschnitts 22 ist zudem eine Kontrolleinheit 4 angeordnet, die vorliegend eine Kommunikationsverbindung 16" zur regionalen Energieverwaltungseinheit 14 aufweist.

Die lokale Energieverwaltungseinheit 12 und die regionale Energieverwaltungseinheit 14 weisen zudem eine Verbindung zu einer externen Quelle 30 bzw. Plattform auf.

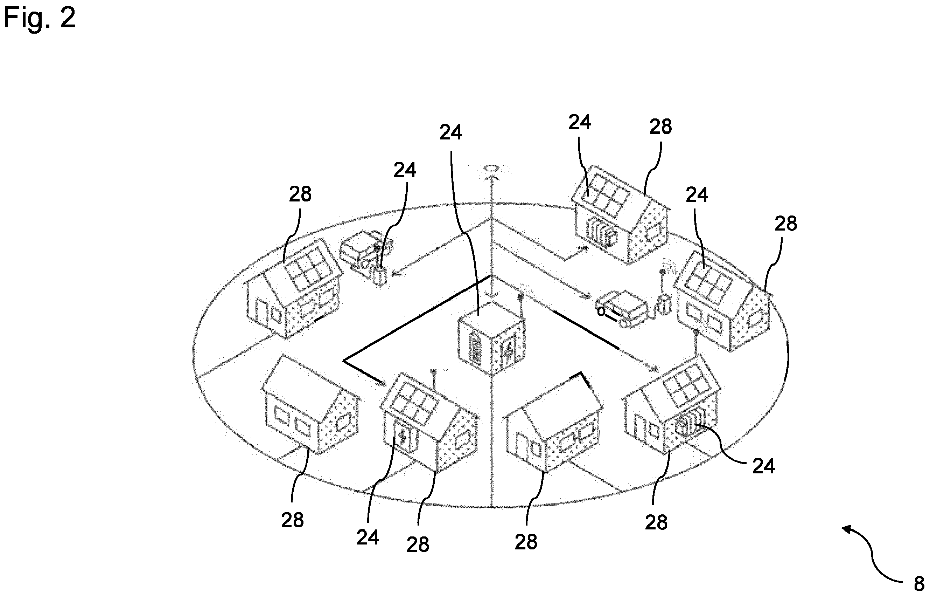

Fig. 2 zeigt eine schematische Darstellung eines lokalen Stromverteilnetzabschnitts 8 gemäß einem ersten Ausführungsbeispiel.

Wie gemäß Fig. 2 zu erkennen ist, umfasst der lokale Stromverteilnetzabschnitt 8 eine Vielzahl von Wohneinheiten 28 mit jeweils dezentralen Energieressourcen 24, wie Photovoltaikanlagen, Wallboxen, Wärmepumpen oder Batteriespeichern.

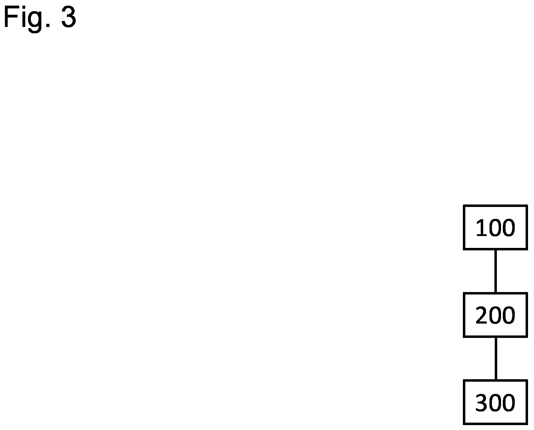

Fig. 3 zeigt eine schematische Darstellung der einzelnen Schritte eines erfindungsgemäßen Verfahrens zum Betreiben eines Stromnetzes zur Übertragung von elektrischem Strom.

Hierbei umfasst das erfindungsgemäße Verfahren die Schritte eines Erfassens 100 eines aktuellen Zustands eines regionalen Stromverteilnetzabschnitts 10 mittels einer regionale Energieverwaltungseinheit 14, eines Erfassens 200 eines aktuellen Zustands eines lokalen Stromverteilnetzabschnitts 8 mittels einer lokalen Energieverwaltungseinheit 12 sowie eines gezielten Steuerns 300 der lokalen Energieverwaltungseinheit 12 auf Basis des aktuellen Zustands des regionalen Stromverteilnetzabschnitts 10, wobei das gezielte Steuern 300 ein Einspeisen von Strom aus dem lokalen Stromverteilnetzabschnitt 8 oder ein Ausspeisen von Strom in den lokalen Stromverteilnetzabschnitt 8 umfasst.

Das gezielte Steuern 300 kann vorliegend zusätzlich auf Basis des aktuellen Zustands des lokalen Stromverteilnetzabschnitts 8 erfolgen.

Dabei kann das gezielte Steuern 300 bspw. auf Basis einer Kommunikation zwischen der lokalen Energieverwaltungseinheit 12 und der regionalen Energieverwaltungseinheit 14 über eine Kommunikationsverbindung 16 erfolgen.

Die Kommunikation zwischen der lokalen Energieverwaltungseinheit 12 und der regionalen Energieverwaltungseinheit 14 kann dabei in aggregierter Form erfolgen.

Das gezielte Steuern 300 kann zudem ein Einspeisen von Strom aus mehreren lokalen Stromverteilnetzabschnitten 8 oder ein Ausspeisen von Strom in mehrere lokale Stromverteilnetzabschnitte 8 umfassen, wobei eine Auswahl der lokalen Stromverteilnetzabschnitte 8 zur Einspeisung oder Ausspeisung von Strom gezielt erfolgen kann.

Zudem kann bspw. ein Erstellen einer Prognose bezüglich eines aktuell und/oder zukünftig zu erwartenden Stromverbrauchs und/oder bezüglich einer aktuell und/oder zukünftig zu erwartenden Stromerzeugung innerhalb eines lokalen und/oder regionalen Stromverteilnetzabschnitts 8, 10 vorgesehen sein.

Mittels des erfindungsgemäßen Energiemanagementsystems 2, der erfindungsgemäßen Kontrolleinheit bzw. des erfindungsgemäßen Verfahrens ist es möglich, unter Gewährleistung einer stabilen Netzspannung auch einen einfach, dynamisch und flexibel anpassbaren Betrieb eines Stromnetzes zu gewährleisten.

### Bezuaszeichenliste

- 2: Energiemanagementsystem
- 4: Kontrolleinheit
- 8: lokaler Stromverteilnetzabschnitt
- 10: regionaler Stromverteilnetzabschnitt
- 12: lokale Energieverwaltungseinheit
- 14: regionale Energieverwaltungseinheit
- 16: Kommunikationsverbindung
- 16': Kommunikationsverbindung
- 16": Kommunikationsverbindung
- 20: Transformator
- 20`: Transformator
- 20": Transformator
- 22: überregionaler Stromverteilnetzabschnitt
- 24: Dezentrale Energieressource
- 26: Energieerzeuger
- 28: Wohneinheit
- 30: Externe Quelle

- 100: Erfassen eines aktuellen Zustands eines regionalen Stromverteilnetzabschnitts
- 200: Erfassen eines aktuellen Zustands eines lokalen Stromverteilnetzabschnitts
- 300: Gezieltes Steuern der lokalen Energieverwaltungseinheit auf Basis des aktuellen Zustands des regionalen Stromverteilnetzabschnitts

## Patentansprüche

1. Energiemanagementsystem (2) zum Betreiben eines Stromnetzes zur Übertragung von elektrischem Strom, aufweisend:
- zumindest einen lokalen Stromverteilnetzabschnitt (8), zur Verteilung von elektrischem Strom auf einem ersten Spannungsniveau,
- einen regionalen Stromverteilnetzabschnitt (10), zur Verteilung von elektrischem Strom auf einem zweiten, vom ersten verschiedenen, Spannungsniveau,
- zumindest eine lokale Energieverwaltungseinheit (12) zur Erfassung eines aktuellen Zustands des lokalen Stromverteilnetzabschnitts (8), zur Steuerung einer Einspeisung von Strom aus dem lokalen Stromverteilnetzabschnitt (8) und zur Steuerung einer Ausspeisung von Strom in den lokalen Stromverteilnetzabschnitt (8),
- zumindest eine regionale Energieverwaltungseinheit (14) zur Erfassung eines aktuellen Zustands des regionalen Stromverteilnetzabschnitts (10), zur Steuerung einer Einspeisung von Strom aus dem regionalen Stromverteilnetzabschnitt (10) und zur Steuerung einer Ausspeisung von Strom in den regionalen Stromverteilnetzabschnitt (10),
- eine Kommunikationsverbindung (16) zwischen der lokalen Energieverwaltungseinheit (12) und der regionalen Energieverwaltungseinheit (14) zur Ausführung einer gezielten Steuerung der lokalen Energieverwaltungseinheit (12) auf Basis des aktuellen Zustands des regionalen Stromverteilnetzabschnitts (10).

2. Energiemanagementsystem (2) nach Anspruch 1,
**dadurch gekennzeichnet,**
**dass** der lokale Stromverteilnetzabschnitt (8) als Niederspannungsnetzabschnitt ausgebildet ist und das erste Spannungsniveau als Niederspannung ausgebildet ist und/oder der regionale Stromverteilnetzabschnitt (10) als Mittelspannungsnetzabschnitt ausgebildet ist und das zweite Spannungsniveau als Mittelspannung ausgebildet ist.

3. Energiemanagementsystem (2) nach Anspruch 1 oder 2,
**dadurch gekennzeichnet,**
**dass** eine Mehrzahl von lokalen Stromverteilnetzabschnitten (8) vorgesehen ist, die vorzugsweise parallel zueinander angeordnet sind, wobei die einzelnen lokalen Stromverteilnetzabschnitte (8) insbesondere jeweils eine lokale Energieverwaltungseinheit (12) aufweisen, und/oder die lokalen Energieverwaltungseinheiten (12) der einzelnen lokalen Stromverteilnetzabschnitte (8) ebenfalls eine Kommunikationsverbindung (16`) zur Kommunikation untereinander aufweisen.

4. Energiemanagementsystem (2) nach einem der vorangehenden Ansprüche,
**dadurch gekennzeichnet,**
**dass** zumindest ein Transformator (20) zur Verbindung des zumindest einen lokalen Stromverteilnetzabschnitts (8) mit dem regionalen Stromverteilnetzabschnitt (10) vorgesehen ist, wobei der Transformator (20) vorzugsweise als Niederspannungs/Mittelspannungstransformator ausgebildet ist.

5. Energiemanagementsystem (2) nach einem der vorangehenden Ansprüche,
**dadurch gekennzeichnet,**
**dass** der Niederspannungsnetzabschnitt das Stromnetz von mehr als 50 Haushalten, wobei zumindest eine Mehrzahl der Haushalte vorzugsweise dezentrale Energieressourcen (24) ausweisen, und/oder
**dass** die lokale Energieverwaltungseinheit (12) im Wesentlichen zentral innerhalb des lokalen Stromverteilnetzabschnitts (8) angeordnet ist.

6. Energiemanagementsystem (2) nach einem der vorangehenden Ansprüche,
**dadurch gekennzeichnet,**
**dass** ein überregionaler Stromverteilnetzabschnitt (22) zur Verteilung von elektrischem Strom auf einem dritten, vom ersten und zweiten verschiedenen, Spannungsniveau, vorgesehen ist, wobei der überregionale Stromverteilnetzabschnitt (22) vorzugsweise als Hochspannungsnetzabschnitt ausgebildet ist und das dritte Spannungsniveau als Hochspannung ausgebildet ist, wobei insbesondere der überregionale Stromverteilnetzabschnitt (22) über Transformatoren (20') mit dem regionalen Stromverteilnetzabschnitt (10) verbunden ist.

7. Energiemanagementsystem (2) nach einem der vorangehenden Ansprüche,
**dadurch gekennzeichnet,**
**dass** die lokale Energieverwaltungseinheit (12) und/oder die regionale Energieverwaltungseinheit (14) eine Sensoreinheit zur Erfassung von Daten zur Bestimmung eines aktuellen Netzzustandes eines lokalen oder regionalen Stromverteilnetzabschnitts (8, 10) und eine Verarbeitungseinheit zur Bestimmung eines aktuellen Netzzustandes eines lokalen oder regionalen Stromverteilnetzabschnitts (8, 10) auf Basis der erfassten Daten aufweist.

8. Kontrolleinheit (4) zur Anordnung in einem Energiemanagementsystem (2) nach einem der vorangehenden Ansprüche.

9. Verfahren zum Betreiben eines Stromnetzes zur Übertragung von elektrischem Strom, vorzugsweise unter Verwendung eines Energiemanagementsystems (2) nach einem der vorangehenden Ansprüche, aufweisend die Schritte:
- Erfassen (100) eines aktuellen Zustands eines regionalen Stromverteilnetzabschnitts (10) mittels einer regionale Energieverwaltungseinheit (14),
- Erfassen (200) eines aktuellen Zustands eines lokalen Stromverteilnetzabschnitts (8) mittels einer lokalen Energieverwaltungseinheit (12),
- Gezieltes Steuern (300) der lokalen Energieverwaltungseinheit (12) auf Basis des aktuellen Zustands des regionalen Stromverteilnetzabschnitts (10), wobei das gezielte Steuern (300) ein Einspeisen von Strom aus dem lokalen Stromverteilnetzabschnitt (8) oder ein Ausspeisen von Strom in den lokalen Stromverteilnetzabschnitt (8) umfasst, insbesondere
dass das gezielte Steuern (300) zusätzlich auf Basis des aktuellen Zustands des lokalen Stromverteilnetzabschnitts (8) erfolgt.

10. Verfahren nach Anspruch 9,
**dadurch gekennzeichnet,**
**dass** das gezielte Steuern (300) auf Basis einer Kommunikation zwischen der lokalen Energieverwaltungseinheit (12) und der regionalen Energieverwaltungseinheit (14) über eine Kommunikationsverbindung (16) erfolgt, wobei im Rahmen der Kommunikation vorzugsweise der aktuelle Zustand des lokalen Stromverteilnetzabschnitts (8) von der lokalen Energieverwaltungseinheit (12) an die regionale Energieverwaltungseinheit (14) übertragen wird und daraufhin insbesondere Anweisungen zur gezielten Steuerung der lokalen Energieverwaltungseinheit (12) von der regionalen Energieverwaltungseinheit (14) an die lokale Energieverwaltungseinheit (12) übertragen werden.

11. Verfahren nach einem der Ansprüche 9 bis 10,
**dadurch gekennzeichnet,**
**dass** die Kommunikation zwischen der lokalen Energieverwaltungseinheit (12) und der regionalen Energieverwaltungseinheit (14) in aggregierter Form erfolgt, wobei vorzugsweise ein aggregierter aktueller Zustand des lokalen Stromverteilnetzabschnitts (8) und/oder aggregierte Anweisungen zur gezielten Steuerung der lokalen Energieverwaltungseinheit (12) übertragen werden.

12. Verfahren nach einem der Ansprüche 9 bis 11,
**dadurch gekennzeichnet,**
**dass** das gezielte Steuern (300) ein Einspeisen von Strom aus mehreren lokalen Stromverteilnetzabschnitten (8) oder ein Ausspeisen von Strom in mehrere lokale Stromverteilnetzabschnitte (8) umfasst, wobei das Einspeisen oder Ausspeisen vorzugsweise zumindest teilweise gleichzeitig erfolgt, und/oder dass eine Auswahl der lokalen Stromverteilnetzabschnitte (8) zur Einspeisung oder Ausspeisung von Strom gezielt erfolgt, wobei eine ein- oder ausgespeiste Strommenge vorzugsweise gleichmäßig auf die ausgewählten Stromverteilnetzabschnitte (8) verteilt wird.

13. Verfahren nach einem der Ansprüche 9 bis 12,
**dadurch gekennzeichnet,**
**dass** ein Erstellen einer Prognose bezüglich eines aktuell und/oder zukünftig zu erwartenden Stromverbrauchs und/oder bezüglich einer aktuell und/oder zukünftig zu erwartenden Stromerzeugung innerhalb eines lokalen und/oder regionalen Stromverteilnetzabschnitts (8, 10) vorgesehen ist, wobei das Erstellen der Prognose vorzugsweise die Erfassung und Verarbeitung von Daten mittels einer Sensoreinheit und einer Verarbeitungseinheit umfasst.

14. Verfahren nach Anspruch 13,
**dadurch gekennzeichnet,**
**dass** zur Erstellung der Prognose eines aktuell und/oder zukünftig zu erwartenden Stromverbrauchs und/oder einer aktuell und/oder zukünftig zu erwartenden Stromerzeugung eine Überwachung des lokalen und/oder regionalen Stromverteilnetzabschnitts (8, 10) durchgeführt wird, wobei die Überwachung vorzugsweise in Echtzeitmessung, insbesondere an strategisch ausgewählten Bereichen des lokalen und/oder regionalen Stromverteilnetzabschnitts (8, 10) erfolgt.

15. Verfahren nach einem der Ansprüche 9 bis 14,
**dadurch gekennzeichnet,**
**dass** das gezielte Steuern (300) der lokalen Energieverwaltungseinheit (12) zusätzlich auf Basis einer Überwachung von Flexibilitätspotentialen innerhalb des lokalen Stromverteilnetzabschnitts (8) erfolgt, wobei die Flexibilitätspotentiale vorzugsweise auf Realbasis bestimmt werden, und/oder
**dass** das Verfahren die Verwendung künstlicher Intelligenz umfasst, wobei vorzugsweise zumindest das gezielte Steuern (300) der lokalen Energieverwaltungseinheit (12) unter Verwendung von künstlicher Intelligenz erfolgt.
